# EUROPEAN PATENT APPLICATION

(11) **EP 1 775 892 A1**
(43) Date of publication of application: **18.04.2007**
(21) Application number: 05767433.5
(22) Date of filing: 28.07.2005
(51) Int. Cl.: H04L 12/56

(54) **MOBILE COMMUNICATION ACCESS SYSTEM, PACKET TRANSFER DEVICE, AND PATH RE-ESTABLISHING METHOD**

(30) Priority: 30.07.2004 JP 2004224963
(71) Applicant: MATSUSHITA ELECTRIC INDUSTRIAL CO., LTD., Osaka 571-8501 (JP)
(72) Inventor: KAWAKAMI, Tetsuya, Matsushita Elect.Ind.Co.,Ltd, 3-7 Shiromi 1 chome, Osaka 540-6319 (JP)
(74) Representative: Casalonga, Axel
(86) International application number: PCT/JP2005/013869
(87) International publication number: WO 2006/011570

(57) **Abstract**

Disclosed is a technique for providing a mobile communication access system, etc., that can eliminate the useless consumption of resources due to route redundancy, reduce the load on the processing, such as the setup of an LSP, performed by an ingress LSR, avoid an increase in the length of a signal route for setting up an LSP, suppress a delay in providing a notification of a change for an egress LSR to which a mobile terminal is to be connected, and perform a rapid handover process. According to this technique, based on identification information for a second edge device 101b that is received from a mobile terminal 100, a first edge device 101a determines whether an output interface that has been decided on for the second edge device is the same as an input interface for a path that has been established for the mobile terminal, and when the interfaces are the same, transmits a path request message to the other packet transfer device. This packet transfer device determines whether the output interface that has been decided on for the second edge device is the same as the input interface for the path that has been established for a mobile terminal, and when the interfaces are not the same, transmits the path message to the output interface and re-establishes the path in accordance with a reserve message.

## Description

### TECHNICAL FIELD

The present invention relates, in a label switching technology such as MPLS (Multi Protocol Label Switching), which transfers data using a label, to a mobile communication access system, a packet transfer device, and a path re-establishing method for controlling a change in a path.

### BACKGROUND ART

With a conventional label switching technology, a standard protocol technique that constitutes an LSP (Label Switch Path) is disclosed in non-patent document 1 below. The technique disclosed in non-patent document 1 is a protocol that constitutes a point-to-point path, and enables the exchange of a PATH message and a Resv message by an ingress LSR (Label Switch Router) and an egress LSR, which serve as edges, so as to form a label path and to reserve a band. On the other hand, standardization is currently performed in order to form a path for a point-to-multipoint path for multicasting, etc., and this technique is disclosed in non-patent document 2 below. The technique in non-patent document 2 employs, in a session object, an identifier that is used in common for identifying a point-to-multipoint path, and forms a point-to-multipoint path using a plurality of point-to-point paths (branch LSPs). Specifically, when an Resv message is received by a branch LSR, which is a branch node, the above described identifier in common is acknowledged, and the branch LSPs of multiple point-to-points that belong to the same point-to-multipoint path are merged. In this manner, a point-to-multipoint path is formed.

When either of these conventional methods is applied to a mobile communication access system, in might be possible to consider that the individual LSPs may be respectively set for mobile terminals, and in accordance with shift, the paths of the LSPs may be changed. Further, as for the application of the MPLS to a mobile unit, several methods have been proposed whereby, based on a change in the IP address of a mobile terminal (MH) in cooperation with a mobile IP, the path is changed to a new IP address (CoA: Care of Address). However, the cooperation with a mobile IP performs a change of an LSP by using a binding update of a new CoA that is outputted from the mobile terminal to an HA (Home Agent) after the handover of the mobile terminal has been completed. Therefore, the change of the path occurs after the operation of the mobile IP results in that the performance of a fast handover is difficult. Thus, our purpose is for an LSP to be treated as a tunnel for layer 2, so that only the handover process on layer 2 need be performed, by changing an LSP, without requiring the handover process on layer 3. Further, for a mobile communication access system, it is assumed that the transfer of a packet is performed while a connection node to an external network is regarded as an ingress LSR (input side edge) for an LSP that serves as a layer 2 tunnel, and an accommodated node wherein a mobile terminal is accommodated is regarded as an egress LSR (output side edge).
Non-patent Document 1: "RSVP-TE: Extensions to RSVP for LSP Tunnels", IETF Standards, RFC 3209
Non-patent Document 2: "Establishing Point to Multipoint MPLS TE LSPs", draft-raggarwa-mpls-p2mp-te-02.txt

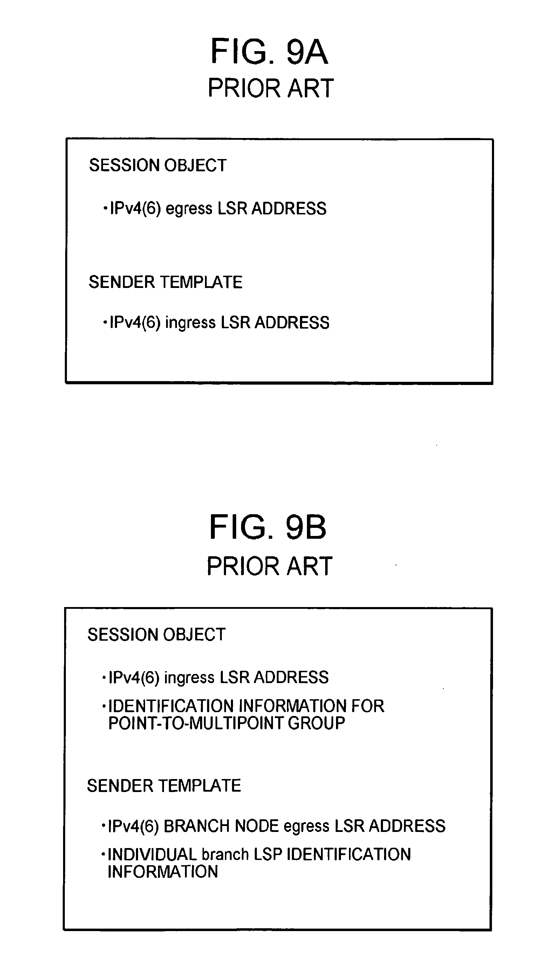

However, in a case wherein the handover process on only the layer 2 is performed, although the IP address for the mobile terminal is unchanged, the LSP should be changed and the packet addressed to the pertinent mobile terminal must be appropriately transferred to a destination. When the route of the LSP is changed as the mobile terminal is moved, the following problem is encountered. First, according to the technique disclosed in non-patent document 1, identification of the LSP for each LSR is defined as shown in Fig. 9A. In order to be identified as the same LSP, the session object should be identical. However, as shown in Fig. 9A, since the address of an egress LSR is employed as a session object, in a case wherein the egress LSR is changed as the mobile terminal is moved, instead of changing the route between the same LSPs, a new LSP is set up, and then a LSP used by the mobile terminal is changed. Therefore, the useless consumption of a resource reservation occurs at the route redundant portion. According to the technique disclosed in non-patent document 2, the LSP is defined as shown in Fig. 9B. Since, as a session object, the address of an ingress LSR is employed instead of an egress LSR, the same value can be used when the egress LSR is changed as the mobile terminal is moved. However, using the technique disclosed in non-patent document 2, the setup and maintenance of a plurality of routes, relative to a plurality of destinations (egress LSRs), must be the responsibility of the ingress LSR. When this technique is applied for mobile communication, the setup and maintenance of an LSP must be performed for each mobile terminal, and the process performed by the ingress LSR becomes enormous, as the number of mobile terminals is increased. Furthermore, according to techniques disclosed in the two non-patent documents described above, since all signaling performed is from the ingress LSR to the egress LSR, the signal route is established, and it is assumed that the ingress LSR knows the egress LSR is the destination. For mobile communication wherein a mobile terminal moves while sequentially changing an egress LSR, a delay in communication with the ingress LSR for the notification of a change for an egress LSR is also increased in accordance with the increase in the size of a network.

### DISCLOSURE OF THE INVENTION

The present invention has been made to solve the above described problems, and one object of the present invention is to provide a mobile communication access system, and provide a packet transfer device and a path re-establishing method that can eliminate a useless consumption of resources due to route redundancy, reduce a load on the processing, such as the setup of an LSP, performed by an ingress LSR, avoid an increase in the length of a signal route for setting up an LSP, suppress a delay in providing a notification of the change for an egress LSR to which a mobile terminal is to be connected, and perform a fast handover process.

To achieve this object, according to the present invention, there is provided a mobile communication access system, which comprises:
edge devices configured to be capable of performing communication with a mobile terminal, and to be arranged at edges of a network for realizing communication between the mobile terminal and a communication destination for the mobile terminal; and
packet transfer devices that belong to the network, are arranged in the network at locations other than the edges, and transfer a packet to be exchanged between the mobile terminal and the communication destination of the mobile terminal,
wherein a path, to which identification information for the mobile terminal is attached, is established via the packet transfer devices between a first edge device, of the edge devices, that is connected to the mobile terminal and a communication destination edge device, of the edge devices, that is connected to the communication destination for the mobile terminal,
wherein, when the mobile terminal changes, due to its move, a connection destination from the first edge device to a second edge device that is one of the edge devices, the mobile terminal receives, from the second edge device, identification information for the second edge device, and transmits, to the first edge device, an attachment request that includes the received identification information for the second edge device,
wherein, on the basis of the identification information for the second edge device that is included in the received attachment request, and of routing table information stored in advance in a predetermined storage area, the first edge device decides an output interface for the second edge device; determines whether or not the output interface for the second edge device that was determined is the same as an input interface for the path that has already been established for the mobile terminal; and when the interfaces are determined to be the same, generates a path request message that includes the identification information for the second edge device and the identification information for the mobile terminal, and transmits the generated path request message to the packet transfer device connected to the first edge device; or when the interfaces are determined not to be the same, transmits, to the determined output interface for the second edge device, a path message that includes the identification information for the second edge device and the identification information for the mobile terminal,
wherein, upon receiving the path request message, the packet transfer device decides an output interface for the second edge device on the basis of the identification information for the second edge device that is included in the received path request message and of routing table information stored in advance in a predetermined storage area; determines whether or not the output interface for the second edge device that has been determined is the same as an input interface for the path that has already been established for the mobile terminal; and when the interfaces are determined to be the same, transfers the path request message to the other packet transfer device connected to the packet transfer device; or when the interfaces are determined not to be the same, transmits, to the determined output interface for the second edge device, a path message that includes the identification information for the second edge device and the identification information for the mobile terminal,
wherein, upon receiving the path message, the second edge device transmits, to the packet transfer device that has transmitted the path message, a reserve message instructing re-establishment of the path to the second edge device, and
wherein the packet transfer device that has transmitted the path message employs the received reserve message, and re-establishes the path from the first edge device to the second edge device. With this arrangement, an unwanted consumption of resources due to route redundancy can be prevented, a load imposed on the processing, such as the setup of an LSP performed by the ingress LSR, can be reduced, an increase in the length of a signal route for setting up the LSP can be avoided, a delay in the notification of the change of the egress LSP, to which the mobile terminal is to be connected, can be suppressed, and a fast handover process can be performed.

Further, according to one preferred embodiment of the mobile communication access system of this invention, the packet transfer device that has transmitted the path message changes the path from the first edge device to the second edge device, and then transmits, to the communication destination edge device, a path change notification that includes the identification information for the second edge device. With this arrangement, delay time for notification of a change does not become a problem, and the communication destination edge device can identify a change in a path performed at a lower level.

Furthermore, according to another preferred embodiment of the mobile communication access system of this invention, the packet transfer device that has transmitted the path message changes the path from the first edge device to the second edge device, and then transmits, to the first edge device, a path re-establishment notification indicating that the path has been re-established. With this arrangement, the first edge device can determine that a new path has been obtained.

Additionally, according to another preferred embodiment of the mobile communication access system of this invention, after the first edge device has received the path re-establishment notification, the first edge device transmits, to the mobile terminal, a notification indicating that a new path has been obtained. With this arrangement, the mobile terminal can determine that a path at a movement destination can be obtained.

Moreover, according to the present invention, in a mobile communication access system comprising:
edge devices configured to be capable of performing communication with a mobile terminal, and to be arranged at edges of an network for realizing communication between the mobile terminal and a communication destination for the mobile terminal; and
packet transfer devices that belong to the network, are arranged in the network at locations other than the edges, and transfer a packet to be exchanged between the mobile terminal and the communication destination of the mobile terminal,
wherein a path, to which identification information for the mobile terminal is attached, is established via the packet transfer devices between a first edge device, of the edge devices, that is connected to the mobile terminal and a communication destination edge device, of the edge devices, that is connected to the communication destination for the mobile terminal,
the packet transfer device in case where the mobile terminal changes, due to its move, a connection destination from the first edge device to a second edge device that is one of the edge devices, comprising:
   reception means for receiving, from the first edge device, a path request message that includes the identification information for the second edge device and the identification information for the mobile terminal, and that requests a change in a setup for the path;
   decision means for deciding an output interface for the second edge device on the basis of the identification information for the second edge device, which is included in the path request message received by the reception means and of routing table information stored in advance in a predetermined storage area;
   determination means for determining whether or not the output interface for the second edge device is the same as an input interface for the path that has already been established for the mobile terminal;
   transmission means for, when the determination means determines that the interfaces are the same, transferring the path request message to the other packet transfer device connected to the packet transfer device, and for, when the determination means determines that the interfaces are not the same, transmitting, to the output interface for the second edge device that has been decided on, a path message that includes the identification information for the second edge device and the identification information for the mobile terminal; and
   re-establishing means for, when the reception means receives a reserve message, instructing re-establishment of the path, from the second edge device that has received the path message from the transmission means, by changing the path from the first edge device to the second edge device.
   With this arrangement, an unwanted consumption of resources due to route redundancy can be prevented, a load imposed on the processing, such as the setup of an LSP performed by the ingress LSR, can be reduced, an increase in the length of a signal route for setting up the LSP can be avoided, a delay in the notification of the change of the egress LSP, to which the mobile terminal is to be connected, can be suppressed, and a fast handover process can be performed.

Further, according to one preferred embodiment of the packet transfer device of this invention, after the re-establishment means has changed the path from the first edge device to the second edge device, the transmission means transmits, to the communication destination edge device, a path change notification that includes the identification information for the second edge device. With this arrangement, delay time for notification of a change does not become a problem, and the communication destination edge device can identify a change in a path performed at a lower level.

Furthermore, according to another preferred embodiment of the packet transfer device of this invention, after the re-establishment means has changed the path from the first edge device to the second edge device, the transmission means transmits, to the first edge device, a path re-establishment notification indicating that the path has been re-established. With this arrangement, the first edge device can determine that a new path has been obtained.

Moreover, according to the present invention, in a mobile communication access system comprising:
edge devices configured to be capable of performing communication with a mobile terminal, and to be arranged at edges of an network for realizing communication between the mobile terminal and a communication destination for the mobile terminal; and
packet transfer devices that belong to the network, are arranged in the network at locations other than the edges, and transfer a packet to be exchanged between the mobile terminal and the communication destination of the mobile terminal,
   wherein a path, to which identification information for the mobile terminal is attached, is established via the packet transfer devices between a first edge device, of the edge devices, that is connected to the mobile terminal and a communication destination edge device, of the edge devices, that is connected to the communication destination for the mobile terminal,
   a path re-establishing method in case where the mobile terminal changes, due to its move, a connection destination from the first edge device to a second edge device that is one of the edge devices, comprising:
   a step in which the mobile terminal receives, from the second edge device, identification information for the second edge device, and transmits, to the first edge device, an attachment request that includes the received identification information for the second edge device;
   a step in which the first edge device, on the basis of the identification information for the second edge device, which is included in the received attachment request and of routing table information stored in advance in a predetermined storage area, decides an output interface for the second edge device, determines whether or not the output interface for the second edge device that was determined is the same as an input interface for the path that has already been established for the mobile terminal, thereby, when the interfaces are determined to be the same, generating a path request message that includes the identification information for the second edge device and the identification information for the mobile terminal, and transmitting the generated path request message to the packet transfer device connected to the first edge device, or when the interfaces are determined not to be the same, transmitting, to the determined output interface for the second edge device, a path message that includes the identification information for the second edge device and the identification information for the mobile terminal;
   a step in which the packet transfer device from which the path request message has been received, decides an output interface for the second edge device on the basis of the identification information for the second edge device, which is included in the received path request message and of routing table information stored in advance in a predetermined storage area, and determines whether or not the output interface for the second edge device that has been determined is the same as an input interface for the path that has already been established for the mobile terminal, thereby when the interfaces are determined to be the same, transferring the path request message to the other packet transfer device connected to the packet transfer device, or when the interfaces are determined not to be the same, transmitting, to the determined output interface for the second edge device, a path message that includes the identification information for the second edge device and the identification information for the mobile terminal;
   a step in which the second edge device, upon receiving the path message, transmits, to the packet transfer device that has transmitted the path message, a reserve message instructing re-establishment of the path to the second edge device; and
   a step in which the packet transfer device that has transmitted the path message, re-establishes the path for the second edge device instead of the first edge device, on the basis of the received reserve message.
   With this arrangement, an unwanted consumption of resources due to route redundancy can be prevented, a load imposed on the processing, such as the setup of an LSP performed by the ingress LSR, can be reduced, an increase in the length of a signal route for setting up the LSP can be avoided, a delay in the notification of the change of the egress LSP, to which the mobile terminal is to be connected, can be suppressed, and a fast handover process can be performed.

Further, according to one preferred embodiment of this invention, the path re-establishing method comprises:
a step in which the packet transfer device that has transmitted the path message changing the path from the first edge device to the second edge device, and then transmitting, to the communication destination edge device, a path change notification that includes the identification information for the second edge device. With this arrangement, delay time for notification of a change does not become a problem, and the communication destination edge device can identify a change in a path performed at a lower level.

Furthermore, according to another preferred embodiment of this invention, the path re-establishing method comprises:
a step in which the packet transfer device that has transmitted the path message changing the path from the first edge device to the second edge device, and then transmitting, to the first edge device, a path re-establishment notification indicating that the path has been re-established. With this arrangement, the first edge device can determine that a new path has been obtained.

Additionally, according to another preferred embodiment of this invention, the path re-establishing method comprises:
A step in which the first edge device transmits, after the first edge device has received the path re-establishment notification, a notification indicating that a new path has been obtained, to the mobile terminal. With this arrangement, the mobile terminal can determine that a path at a movement destination can be obtained.

The mobile communication access system, the packet transfer device and the path re-establishing method of this invention have the above described arrangement. With this arrangement, an unwanted consumption of resources due to route redundancy can be prevented, a load imposed on the processing, such as the setup of an LSP performed by the ingress LSR, can be reduced, an increase in the length of a signal route for setting up the LSP can be avoided, a delay in the notification of the change of the egress LSP, to which the mobile terminal is to be connected, can be suppressed, and a fast handover process can be performed.

### BRIEF DESCRIPTION OF THE DRAWINGS

[Fig. 1A]
   A diagram showing a mobile communication access system, according to one mode of the present invention, before a mobile terminal in the mobile communication access system moves.
[Fig. 1B]
   A diagram showing the mobile communication access system, according to the mode of the present invention, after the mobile terminal in the mobile communication access system has moved.
[Fig. 2A]
   A diagram showing the protocol stack of a control plane for the mobile communication access system according to the mode of the present invention.
[Fig. 2B]
   A diagram showing the protocol stacks of a transfer plane for the mobile communication access system according to the mode of the present invention.
[Fig. 3]
   A diagram for explaining the identification of an LSP for the mobile communication access system according to the mode of the present invention.
[Fig. 4]
   A sequence chart for explaining example operating procedures for the mobile communication access system according to the mode of the present invention.
[Fig. 5A]
   A diagram showing a transfer table before movement of an MH that is managed by a packet transfer device serving as a branch node in the mobile communication access system according to the mode of the present invention.
[Fig. 5B]
   A diagram showing a transfer table after movement of the MH that is managed by the packet transfer device, which serves as a branch node in the mobile communication access system according to the mode of the present invention.
[Fig. 6]
   A flowchart for explaining the processing performed in the mobile communication system of the mode of the invention when an edge device, before moving, receives an attachment request.
[Fig. 7]
   A configuration diagram for explaining the configuration of a packet transfer device according to the mode of the present invention.
[Fig. 8]
   A flowchart for explaining the processing performed by the packet transfer device, for the mode of the invention, when a path message is received.
[Fig. 9A]
   A diagram showing an example for explaining components for identifying an LSP according to the prior art.
[Fig. 9B]
   A diagram showing another example for explaining components for identifying an LSP according to the prior art.

### BEST MODE FOR CARRYING OUT THE INVENTION

A mobile communication access system and a packet transfer device according to one mode of the present invention will now be explained by employing Figs. 1A to 8. Figs. 1A and 1B are configuration diagrams for explaining the configuration of a mobile communication access system according to the mode of the present invention. Figs. 2A and 2B are diagrams for explaining the protocol stacks for the mobile communication access system of the mode of the present invention. Fig. 3 is a diagram for explaining the identification of an LSP for the mobile communication access system according to the mode of the invention. Fig. 4 is a sequence chart for explaining example operating procedures for the mobile communication access system according to the mode of the invention. Figs. 5A and 5B are diagrams for explaining a transfer table managed by the packet transfer device that serves as a branch node for the mobile communication access system of the mode of the invention. Fig. 6 is a flowchart for explaining the processing performed in the mobile communication system of the mode of the invention when an attachment request is received from an edge device before movement. Fig. 7 is a configuration diagram for explaining the arrangement of the packet transfer device according to the mode of the invention. Fig. 8 is a flowchart for explaining the processing, performed by the packet transfer device according to the mode of the invention, when a path message is received.

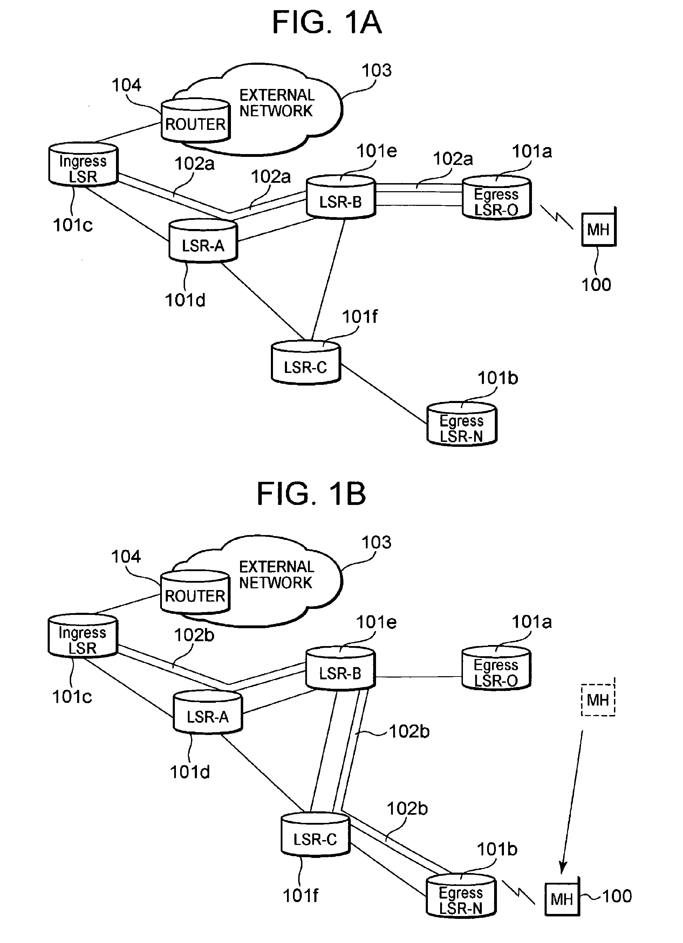

First, the mobile communication access system according to the mode of the invention will be explained while referring to Figs. 1A and 1B. The mobile communication system before a mobile terminal 100 was moved is shown in Fig. 1A, and the mobile communication access system after the mobile terminal 100 was moved is shown in Fig. 1B. The mobile communication access system for the mode of this invention comprises: the mobile terminal (hereinafter also called an MH (Mobile Host) 100; a pre-movement label switch router (hereinafter also called an Egress LSR-O, and corresponding to a first edge device described above) 101a, which is a label switch router to which the mobile terminal 100 is currently connected; a post-movement label switch router (hereinafter also called an Egress LSR-N, and corresponding to a second edge device described above) 101b, which is a label switch router to which the mobile terminal 100 is to be connected after moving; a communication destination side label switch router (hereinafter also called an Ingress LSR) 101c, which is a label switch router that is connected to a router 104 of an external network 103 and relays communications between the mobile terminal 100 and a communication destination (not shown) for the mobile terminal 100; and label switch routers (hereafter also called LSR-A to LSR-C) 101d to 101f, which are located between the pre-movement label switch router 101a, the post-movement label switch router 101b and the communication destination side label switch router 101c. An LSP (Label Switch Path) 102a, for which identification information allocated to the mobile terminal 100 is provided, is established between the pre-movement label switch router 101a and the communication destination side label switch router 101c. Hereinafter, the LSP is also simply called a path.

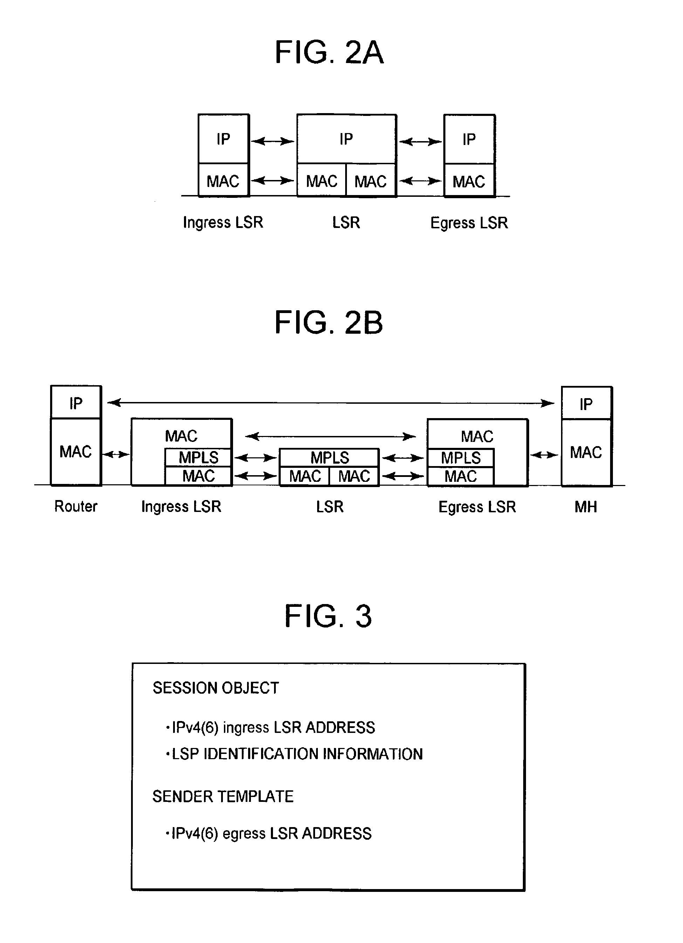

In order to clearly represent the processing for a control message and the transfer of user data, protocol stacks for the mobile communication access system of this invention are shown in Figs. 2A and 2B. A protocol stack for a control plane is shown in Fig. 2A, and a protocol stack for a transfer plane is shown in Fig. 2B. The mobile communication access system of the invention is a system that connects the mobile terminal (MH) 100 to an external network, such as the Internet or an ISP network. According to the mobile communication access system of this invention, two plane structures are provided: a control plane for performing network control or the setup of an LSP; and a transfer plane for exchanging data concerning the mobile terminal with an external network. The control plane is operated as a common IP network, and through routing, a packet is transferred between the individual LSRs. On the other hand, the transfer plane is an L2 tunnel along which the mobile terminal and an external network are connected by a layer 2, and an LSP set by the control plane is operated as an L2 tunnel. Thus, when the mobile terminal is moved and the egress LSR is changed, the IP address of the mobile terminal still need not be changed.

A movement tracking system, which is similar to the mobile communication access system of the mode of the invention, is disclosed in Japanese Patent Laid-Open Application No. 2003-244205. However, the mobile communication access system according to the mode of the invention differs from the movement tracking system disclosed in Japanese Patent Laid-Open Application No. 2003-244205 in its basic arrangement. The mobile communication access system of the mode of this invention is provided on the assumption that a point-to-point path is formed between the communication destination side router 101c and the pre-movement label switch router 101a, to which the mobile terminal 100 is connected. On the other hand, according to the movement tracking system disclosed in Japanese Patent Laid-Open Application No. 2003-244205, a QoS (Quality of Service) path is formed by using a TR (Transit Router) as a boundary. From the above description, accordingly, the path re-establishment processing, etc., is different, so that it can be said that each of the two inventions differ from the other. The components for identifying an LSP will now be explained while referring to Fig. 3. As shown in Fig. 3, the LSP is identified by using a session object and a sender template. The session object includes the address of the Ingress LSR 101c, which is a start node address, and identification information for the LSP, which is allocated to the MH 100, and the sender template includes the address of the Egress LSR, which is an end node address. The above described identification information for the LSP is an identifier that the Ingress LSR 101c allocates the MH 100, and when the MH 100 has accessed the mobile communication access system of this invention the first time, the MH 100 obtains identification information for the pertinent LSP from the Egress LSR that is connected.

When, in accordance with the movement, the mobile terminal 100 has received, from the post-movement label switch router 101b, a beacon that includes, for example, identification information for the post-movement label switch router 101b, and has completed a predetermined process, as shown in the state in Fig. 1B, the mobile terminal 100 is connected to the post-movement label switch router 101b. The path 102b, which was established between the pre-movement label switch router 101a and the communication destination side label switch router 101c, is re-established, as a path 102b, between the post-movement label switch router 101b and the communication destination side label switch router 101c. It should be noted that the predetermined process will be described later.

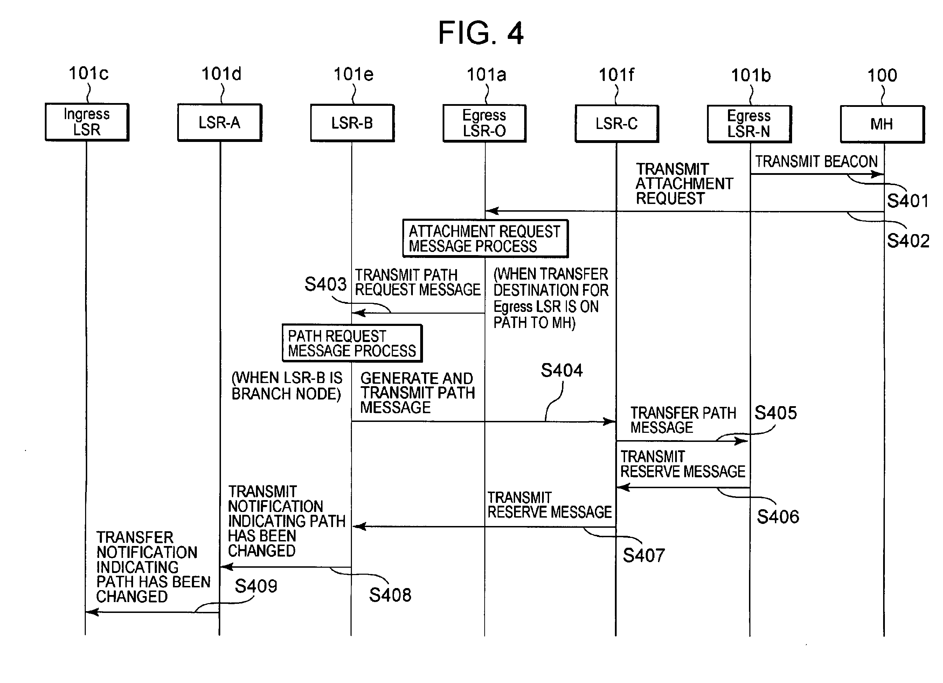

Example operating procedures performed by the mobile communication access system according to the mode of the invention will now be described while referring to Fig. 4. First, the Egress LSR-N 101b transmits, to the surroundings, a beacon that includes, for example, identification information for the Egress LSR-N 101b (e.g., the IP address of the Egress LSR-N 101b used by the control plane) (step S401). At this time, the beacon may be transmitted periodically. Upon receiving the beacon, the MH 100 transmits, to the Egress LSR-O 101a, an attachment request that includes identification information for the Egress LSR-N 101b and identification information for the LSP allocated to the MH 100 (step S402). It should be noted that the MH 100 employs, for example, the change of a beacon reception intensity to select a new movement destination, and transmits an attachment request. Further, the identification information for the LSP allocated to this MH 100 is stored in a predetermined area of the MH 100.

When the Egress LSR-O 101a has received an attachment request that includes identification information for the Egress LSR-N 101b and identification information for the LSP allocated to the MH 100, the Egress LSR-O 101a employs the identification information for the Egress LSR-N 101b, which is included in the attachment request, and routing table information for the control plane, which is stored in advance in a predetermined storage area, and decides on an output (destination) interface for routing a packet to the Egress LSR-N 101b. Then, Egress LSR-O 101a determines whether the output interface for the Egress LSR-N 101b that has been decided on is the same as the input interface for the path 102a that has already been established for the MH 100. When the interfaces are determined to be the same, the Egress LSR-O 101a generates a path request message, which includes the identification information for the Egress LSR-N 101b and the identification information for the LSP allocated to the MH 100, and transmits the generated path request message to the output interface that has been decided on (step S403). When the interfaces are determined not to be the same, the Egress LSR-O 101a generates a path message that includes identification information for the Egress LSR-N 101b and identification information for the LSP allocated to the MH 100, and transmits the generated path message to the output interface that has been decided on. At this time, instead of the address of the Egress LSR-N 101b, the address of the Ingress LSR 101c, which served as the ingress LSR when the path for the MH 100 was formed, is employed as the IPv4 (Internet Protocol Version)(6) ingress LSR address for the session object that is included in the output path message. Here, the routing table information is information that is used for IP routing for exchanging, for example, a common control packet with the control plane. Further, the processing performed by the Egress LSR-O 101a that has received the attachment request will be described later.

The LSR-B 101e, which has received a path request message, employs the identification information for the Egress LSR-N 101b, included in the path request message, and routing table information, stored in advance in a predetermined storage area, decides on an output (destination) interface for the Egress LSR-N 101b, and determines whether the output interface for the Egress LSR-N 101b that has been decided on is the same as the input interface for the path 102a that has already been established for the MH 100. When the interfaces are determined not to be the same, the LSR-B 101e generates a path message that includes identification information for the Egress LSR-N 101b and identification information for the LSP allocated to the MH 100, and transmits the path message to the output interface that has been decided on (step S404). Also in this case, the address of the Ingress LSR 101c is employed as the IPv4(6) ingress LSR address in the session object for the generated path message. When the interfaces are determined to be the same, the path request message is transferred through the output interface that has been decided on to the other packet transfer device that is connected to the LSR-B 101e.

Upon receiving the path message, the LSR-C 101f processes the path message, and further transfers the path message to the Egress LSR-N 101b in accordance with information included in the path message (step S405). Upon receiving the path message, along the route across which the path message was transferred, the Egress LSR-N 101b obtains a route and a band relative to the path message and transmits a reserve message to allocate a label (step S406). Upon receiving the reserve message, the LSR-C 101f examines the received reserve message and establishes a label that is to be used to transfer a packet downstream, and also obtains a route and a band for the received path message and transmits, to the LSR-B 101e that transmitted the path message, a reserve message for allocating a label (step S407). Upon receiving the reserve message, the LSR-B 101e employs the reserve message to change the output interface and a label to be used when a packet transmitted by the MH 100 is to be transferred downstream. As a result, the transfer destination of the path 102a is changed from the Egress LSR-O 101a to the Egress LSR-N 101b. When the path 102a has been re-established, the LSR-B 101e transmits, to the Ingress LSR 101c, a notification indicating that the path has been changed (step 408). Upon receiving the notification indicating the path has been changed, the LSR-A 101d internally changes the egress LSR of the path 102a, and transfers, to the Ingress LSR 101c, the notification indicating the path has been changed (step S409) .

It should be noted that, after the LSR-B 101e has transmitted the path message and has changed the path 102a from the Egress LSR-O 101a to the Egress LSR-N 101b, the LSR-B 101e may transmit, to the Egress LSR-O 101a, a path reconfiguration notification indicating that the path 102b could be reconfigured. Further, upon receiving the path reconfiguration notification, the Egress LSR-O 101a may transmit, to the MH 100, a notification indicating a new path 102a has been obtained. According to this mode, the LSR-B 101e that has received a reserve message has changed the output interface; however, as another arrangement, instead of being changed, an output interface may be added, and a packet may be copied and transferred to both Egress LSRs.

From the above description, when the MH 100 changes a connection from the Egress LSR-0 101a to the Egress LSR-N 101b, the Ingress LSR 101c need not perform the calculation for a path and transmit a signal for re-establishing the path. Therefore, when many MHs are accommodated and many paths are controlled, the load imposed on the Ingress LSR 101c can be reduced. Further, since a new path is automatically configured from the Egress LSR-O 101a to the Egress LSR-N 101b, the signaling period can be reduced. Additionally, during the path configuration, since a branch node of a path is automatically determined, a return path from the Egress LSR-O 101a to the Egress LSR-N 101b (a path established between the Egress LSR-O 101a and the LSR-B 101e) need not be configured, and a wasted route, such that a path is reciprocated, can be eliminated. Additionally, since signaling is not performed between a packet transfer device at a branch node and the Ingress LSR 101c, consumption of a band by a configuration consisting of a plurality of paths can be also removed. Furthermore, since a notification indicating a change in the connection destination of the MH 100 is not transmitted to the Ingress LSR 101c until rerouting to a new path has been completed, the delay time for transmitting the change notification does not produce a problem for the switching of the path. Moreover, since a path can be configured before communication with the Egress LSR-N 101b is established, a more rapid handover can be performed.

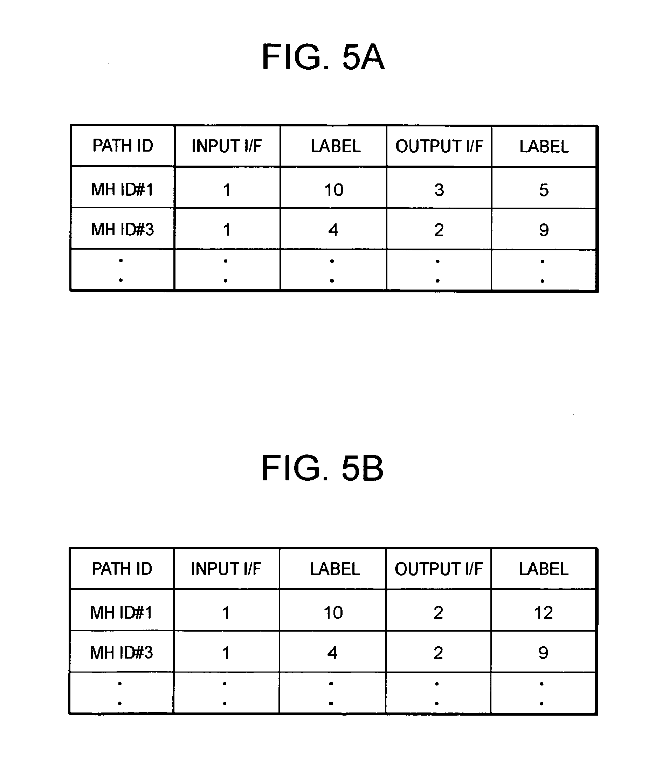

While referring to Figs. 5A and 5B, alteration of a transfer table performed when a path is changed will be described by employing, as an example, a transfer table managed by the LSR-B 101e. As shown in Figs. 5A and 5B, paths from individual MHs that are established for the LSR-B 101e are managed in the transfer table. The transfer table before and after MH#1 has been moved will be explained below. The transfer table before MH#1 has been moved is shown in Fig. 5A, and the transfer table after MH#1 has been moved is shown in Fig. 5B.

As shown in Fig. 5A, in the transfer table concerning MH#1, before MH#1 is moved, MHID#1 is entered as a path ID, 1 is entered as an input I/F, 10 is entered as its label, 3 is entered as an output I/F, and 5 is entered as its label. When MH#1 is moved in this state, wherein a path is established, the connection destination for MH#1 is changed, and the path is changed accordingly, so that the transfer table is as shown in Fig. 5B. That is, the output I/F is changed; and 2 is entered as the output I/F and 12 is entered as its label. As a result, it is found that the LSR-B 101e changes the path 102a established between the LSR-B 101e and the Egress LSR-O 101a, and re-establishes a path 102b extending from the LSR-B 101e to the Egress LSR-N 101b, to which MH#1 is newly connected. It should be noted that the situation, as it pertains to MH#3, is treated in the same manner.

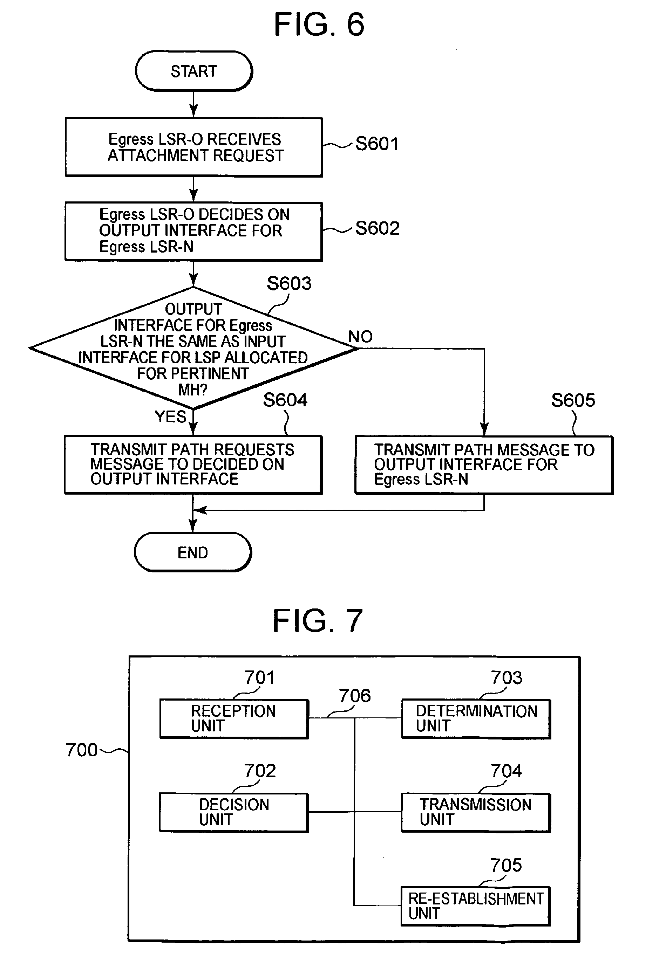

Next, while referring to Fig. 6, an explanation will be given for the processing performed in the mobile communication access system of the mode of the invention when the edge device, before movement, has received an attachment request. The Egress LSR-O 101a receives an attachment request that includes identification information for the Egress LSR-N 101b (step S601). The Egress LSR-0 101a decides on an output (destination) interface for the Egress LSR-N 101b based on identification information for the Egress LSR-N 101b, included in the attachment request, and routing table information, stored in advance in a predetermined storage area (step S602). The Egress LSR-O 101a determines whether the output interface for the Egress LSR-N 101b that has been decided on is the same as the input interface for a path that has already been established for the MH 100 (i.e., determines whether the output interface for the Egress LSR-N 101b is the same as the input interface for the LSP allocated to the MH 100) (step S603). When the interfaces are determined to be the same, the Egress LSR-O 101a generates a path request message that includes the identification information for the Egress LSR-N 101b and the identification information for the LSP allocated to the MH 100, and transmits the generated path request message to the output interface that has been decided on. That is, the path request message is transmitted, via the decided on output interface, to the LSR-B 101e connected to the Egress LSR-O 101a (step S604). On the other hand, when the interfaces are determined not to be the same, the Egress LSR-0 101a generates a path message that includes identification information for the Egress LSR-N 101b and identification information for the LSP allocated to the MH 100, and transmits the generated path message to the output interface for the Egress LSR-N 101b that has been decided on (step S605).

Next, the arrangement of the packet transfer device for the mode of the present invention will be explained while referring to Fig. 7. Here, the packet transfer device is a device corresponding to the LSR-A 101d, the LSR-B 101e or the LSR-C 101f described above. As shown in Fig. 7, a packet transfer device 700 includes a reception unit 701, a decision unit 702, a determination unit 703, a transmission unit 704 and a re-establishment unit 705, all of which are connected by a bus 706. Furthermore, the packet transfer device 700 stores, in a predetermined storage area (not shown), a control program for controlling the operation of the packet transfer device 700, and control is based on the control program. Further, the packet transfer device 700 includes an interface (not shown) for performing external communication.

The reception unit 701 receives, from the Egress LSR-O 101a, a path request message that includes identification information for the Egress LSR-N 101b and identification information for the LSP allocated to the MH 100. The reception unit 701 also receives a reserve message from the Egress LSR-N 101b. The decision unit 702 employs the identification information for the Egress LSR-N 101b, which is included in the path request message received by the reception unit 701, and routing table information, which is stored in advance in a predetermined storage area, and decides on an output (destination) interface for the Egress LSR-N 101b. The determination unit 703 determines whether the output interface for the Egress LSR-N 101b, which is decided on by the decision unit 702, is the same as the input interface of the path 102a that has already been established for the MH 100. When the determination unit 703 determines that interfaces are the same, the transmission unit 704 transfers the path request message through the output interface that has been decided on for the LSR-N 101b to the other packet transfer device that is connected to the packet transfer device 700, or when the determination unit 703 determines that the interfaces are not the same, transmits, to the decided on output interface, a path message that includes identification information for the Egress LSR-N 101b and identification information for the LSP allocated to the MH 100. When the reception unit 701 receives, from the Egress LSR-N 101b that has received a path message from the transmission unit 704, a reserve message for instructing re-establishment of the path 102a, the re-establishment unit 705 changes a label switch transfer table and changes the path 102a from the Egress LSR-O 101a to the Egress LSR-N 101b.

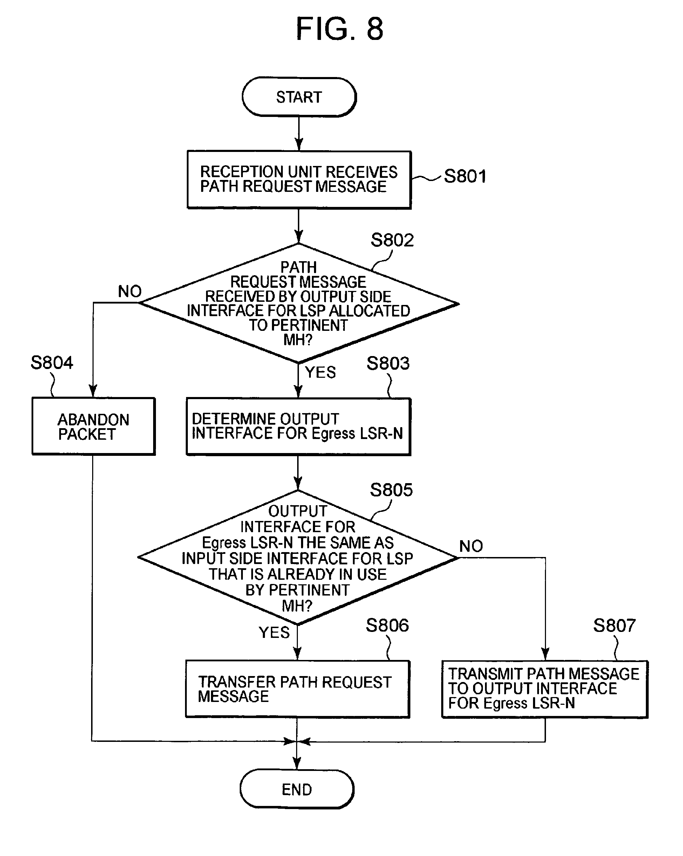

Sequentially, while referring to Fig. 8, an explanation will be given for the processing performed by the packet transfer device, for the mode of this invention, when a path message is received. The reception unit 701 receives, from the Egress LSR-O 101a, a path request message that includes identification information for the Egress LSR-N 101b and identification information for the LSP allocated to the MH 100, and that requests a change in the setup of a path (step S801). The decision unit 702 determines whether the path request message has been received on the output side interface for the path 102a (i.e., the path request message has been received on the output side interface for the LSP allocated to the MH 100) (step S802). When it is determined that the path request message has been received by the output side interface of the path 102a, the decision unit 702 employs identification information for the Egress LSR-n 101b, which is included in the path request message received by the reception unit 701, and routing table information, which is stored in advance in a predetermined storage area, and decides on an output (destination) interface for the Egress LSR-N 101b (step S803). On the other hand, when it is determined at step S802 that the path request message has been received by the output side interface of the path 102a, the received packet is abandoned (step S804).

The determination unit 703 determines whether the output interface for the Egress LSR-N 101b, which is decided on by the decision unit 702, is the same as the input interface for the path 102a that has already been established for the MH 100 (i.e., determines whether the output interface for the Egress LSR-N 101b is the same as the input side interface for the LSP that has already been employed by the MH 100) (step S805). When the interfaces are determined to be the same, the transmission unit 704 transmits the received path request message via the decided on output interface to the other packet transfer device that is connected to the packet transfer device 700 (step S806). On the other hand, when at step S805 the interfaces are determined not to be the same, the transmission unit 704 transmits, to the output interface that has been decided on for the Egress LSR-N 101b, a path message that includes identification information for the Egress LSR-N 101b and identification information for the LSP allocated to the MH 100 (step S807).

From the above description, when the MH 100 changes a connection from the Egress LSR-O 101a to the Egress LSR-N 101b, the Ingress LSR 101c need not perform the calculation for a path and for re-establishing the path. Therefore, when many paths are controlled, the load imposed on the Ingress LSR 101c can be reduced. Further, since a new path is automatically configured from the Egress LSR-O 101a to the Egress LSR-N 101b, the signaling period can be reduced. In addition, during the path configuration, since a branch node for a path is automatically determined, a return path from the Egress LSR-O 101a to the Egress LSR-N 101b need not be configured, and a wasted route can be eliminated. Additionally, since signaling is not performed between a packet transfer device at a branch node and the Ingress LSR 101c, consumption of a band by a configuration consisting of a plurality of paths can be also removed. Furthermore, since a notification indicating a change in the connection destination of the MH 100 is not transmitted to the Ingress LSR 101c until the rerouting to a new path has been completed, a delay time for transmitting the change notification does not cause any problem. Moreover, since a path can be configured before communication with the Egress LSR-N 101b has been established, a more rapid handover can be performed.

### INDUSTRIAL APPLICABILITY

According to the mobile communication system, the packet transfer device and the path re-establishing method of this invention, an unwanted consumption of resources due to route redundancy can be prevented, a load imposed on the processing, such as the setup of an LSP performed by the ingress LSR, can be reduced, an increase in the length of a signal route for setting up the LSP can be avoided, a delay in the notification of the change of the egress LSP, to which the mobile terminal is to be connected, can be suppressed, and a fast handover process can be performed. Therefore, for the label switching technology that employs a label, such as an MPLS, to transfer data, the present invention is useful for a mobile communication access system, a packet transfer device, a path re-establishing method, etc that controls a route change.

## Claims

1. A mobile communication access system comprising:
edge devices configured to be capable of performing communication with a mobile terminal, and to be arranged at edges of an network for realizing communication between the mobile terminal and a communication destination for the mobile terminal; and
packet transfer devices that belong to the network, are arranged in the network at locations other than the edges, and transfer a packet to be exchanged between the mobile terminal and the communication destination of the mobile terminal,
wherein a path, to which identification information for the mobile terminal is attached, is established via the packet transfer devices between a first edge device, of the edge devices, that is connected to the mobile terminal and a communication destination edge device, of the edge devices, that is connected to the communication destination for the mobile terminal,
wherein, when the mobile terminal changes, due to its move, a connection destination from the first edge device to a second edge device that is one of the edge devices, the mobile terminal receives, from the second edge device, identification information for the second edge device, and transmits, to the first edge device, an attachment request that includes the received identification information for the second edge device,
wherein, on the basis of the identification information for the second edge device that is included in the received attachment request, and of routing table information stored in advance in a predetermined storage area, the first edge device decides an output interface for the second edge device; determines whether or not the output interface for the second edge device that was determined is the same as an input interface for the path that has already been established for the mobile terminal; and when the interfaces are determined to be the same, generates a path request message that includes the identification information for the second edge device and the identification information for the mobile terminal, and transmits the generated path request message to the packet transfer device connected to the first edge device; or when the interfaces are determined not to be the same, transmits, to the determined output interface for the second edge device, a path message that includes the identification information for the second edge device and the identification information for the mobile terminal,
wherein, upon receiving the path request message, the packet transfer device decides an output interface for the second edge device on the basis of the identification information for the second edge device that is included in the received path request message and of routing table information stored in advance in a predetermined storage area; determines whether or not the output interface for the second edge device that has been determined is the same as an input interface for the path that has already been established for the mobile terminal; and when the interfaces are determined to be the same, transfers the path request message to the other packet transfer device connected to the packet transfer device; or when the interfaces are determined not to be the same, transmits, to the determined output interface for the second edge device, a path message that includes the identification information for the second edge device and the identification information for the mobile terminal,
wherein, upon receiving the path message, the second edge device transmits, to the packet transfer device that has transmitted the path message, a reserve message instructing re-establishment of the path to the second edge device, and
wherein the packet transfer device that has transmitted the path message employs the received reserve message, and re-establishes the path from the first edge device to the second edge device.

2. The mobile communication access system according to claim 1, wherein the packet transfer device that has transmitted the path message changes the path from the first edge device to the second edge device, and then transmits, to the communication destination edge device, a path change notification that includes the identification information for the second edge device.

3. The mobile communication access system according to claim 1, wherein the packet transfer device that has transmitted the path message changes the path from the first edge device to the second edge device, and then transmits, to the first edge device, a path re-establishment notification indicating that the path has been re-established.

4. The mobile communication access system according to claim 3, wherein, after the first edge device has received the path re-establishment notification, the first edge device transmits, to the mobile terminal, a notification indicating that a new path has been obtained.

5. In a mobile communication access system comprising:
edge devices configured to be capable of performing communication with a mobile terminal, and to be arranged at edges of an network for realizing communication between the mobile terminal and a communication destination for the mobile terminal; and
packet transfer devices that belong to the network, are arranged in the network at locations other than the edges, and transfer a packet to be exchanged between the mobile terminal and the communication destination of the mobile terminal,
wherein a path, to which identification information for the mobile terminal is attached, is established via the packet transfer devices between a first edge device, of the edge devices, that is connected to the mobile terminal and a communication destination edge device, of the edge devices, that is connected to the communication destination for the mobile terminal,
the packet transfer device in case where the mobile terminal changes, due to its move, a connection destination from the first edge device to a second edge device that is one of the edge devices, comprising:
reception means for receiving, from the first edge device, a path request message that includes the identification information for the second edge device and the identification information for the mobile terminal, and that requests a change in a setup for the path;
decision means for deciding an output interface for the second edge device on the basis of the identification information for the second edge device, which is included in the path request message received by the reception means and of routing table information stored in advance in a predetermined storage area;
determination means for determining whether or not the output interface for the second edge device is the same as an input interface for the path that has already been established for the mobile terminal;
transmission means for, when the determination means determines that the interfaces are the same, transferring the path request message to the other packet transfer device connected to the packet transfer device, and for, when the determination means determines that the interfaces are not the same, transmitting, to the output interface for the second edge device that has been decided on, a path message that includes the identification information for the second edge device and the identification information for the mobile terminal; and
re-establishing means for, when the reception means receives a reserve message, instructing re-establishment of the path, from the second edge device that has received the path message from the transmission means, by changing the path from the first edge device to the second edge device.

6. The packet transfer device according to claim 5, wherein, after the re-establishment means has changed the path from the first edge device to the second edge device, the transmission means transmits, to the communication destination edge device, a path change notification that includes the identification information for the second edge device.

7. The packet transfer device according to claim 5, wherein, after the re-establishment means has changed the path from the first edge device to the second edge device, the transmission means transmits, to the first edge device, a path re-establishment notification indicating that the path has been re-established.

8. In a mobile communication access system comprising:
edge devices configured to be capable of performing communication with a mobile terminal, and to be arranged at edges of an network for realizing communication between the mobile terminal and a communication destination for the mobile terminal; and
packet transfer devices that belong to the network, are arranged in the network at locations other than the edges, and transfer a packet to be exchanged between the mobile terminal and the communication destination of the mobile terminal,
wherein a path, to which identification information for the mobile terminal is attached, is established via the packet transfer devices between a first edge device, of the edge devices, that is connected to the mobile terminal and a communication destination edge device, of the edge devices, that is connected to the communication destination for the mobile terminal,
a path re-establishing method in case where the mobile terminal changes, due to its move, a connection destination from the first edge device to a second edge device that is one of the edge devices, comprising:
a step in which the mobile terminal receives, from the second edge device, identification information for the second edge device, and transmits, to the first edge device, an attachment request that includes the received identification information for the second edge device;
a step in which the first edge device, on the basis of the identification information for the second edge device, which is included in the received attachment request and of routing table information stored in advance in a predetermined storage area, decides an output interface for the second edge device, determines whether or not the output interface for the second edge device that was determined is the same as an input interface for the path that has already been established for the mobile terminal, thereby, when the interfaces are determined to be the same, generating a path request message that includes the identification information for the second edge device and the identification information for the mobile terminal, and transmitting the generated path request message to the packet transfer device connected to the first edge device, or when the interfaces are determined not to be the same, transmitting, to the determined output interface for the second edge device, a path message that includes the identification information for the second edge device and the identification information for the mobile terminal;
a step in which the packet transfer device from which the path request message has been received, decides an output interface for the second edge device on the basis of the identification information for the second edge device, which is included in the received path request message and of routing table information stored in advance in a predetermined storage area, and determines whether or not the output interface for the second edge device that has been determined is the same as an input interface for the path that has already been established for the mobile terminal, thereby when the interfaces are determined to be the same, transferring the path request message to the other packet transfer device connected to the packet transfer device, or when the interfaces are determined not to be the same, transmitting, to the determined output interface for the second edge device, a path message that includes the identification information for the second edge device and the identification information for the mobile terminal;
a step in which the second edge device, upon receiving the path message, transmits, to the packet transfer device that has transmitted the path message, a reserve message instructing re-establishment of the path to the second edge device; and
a step in which the packet transfer device that has transmitted the path message, re-establishes the path for the second edge device instead of the first edge device, on the basis of the received reserve message.

9. The path re-establishing method according to claim 8, further comprising:
a step in which the packet transfer device that has transmitted the path message changing the path from the first edge device to the second edge device, and then transmitting, to the communication destination edge device, a path change notification that includes the identification information for the second edge device.

10. The path re-establishing method according to claim 8, further comprising:
a step in which the packet transfer device that has transmitted the path message changing the path from the first edge device to the second edge device, and then transmitting, to the first edge device, a path re-establishment notification indicating that the path has been re-established.

11. The path re-establishing method according to claim 10, further comprising:
a step in which the first edge device transmits, after the first edge device has received the path re-establishment notification, a notification indicating that a new path has been obtained, to the mobile terminal.
